# EUROPEAN PATENT APPLICATION

(11) **EP 3 650 126 A2**
(43) Date of publication of application: **13.05.2020**
(21) Application number: 19184531.2
(22) Date of filing: 04.07.2019
(51) Int. Cl.: B05B 11/00, B29C 49/22, B65D 1/02

(54) **MULTIFLUID DISPENSING SYSTEM AND METHOD THEREOF**

(30) Priority: 04.07.2018 RO 201800505; 30.10.2018 RO 201800856; 29.05.2019 EP 19177450
(71) Applicant: Exojet Technologies Srl, 510219 Alba Iulia (RO)
(72) Inventor: CORABIAN, Claudiu-Paul, 405370 GHERLA (RO)

(57) **Abstract**

Multifluid dispensing system comprising a receptacle of container in container type and an atomizer. Within the receptacle, between at least two of the component-units is provided a connecting-system that includes at least some of: at least one residual interface; at least one permanent-joint of adhesive or weld type; at least one reinforcing functional-form. The connecting-system preferably extends on the entire height of the receptacle. The parts of the connecting-system are preferably, at least partially, superimposed and contained within an operational-section. Additionally, within the receptacle is provided a partitioning-system that consists of at least one mobile-sector which develops via delamination from an internal component-unit. Within the receptacle is equally provided a compression-system that consists of at least one mobile-sector which also develops via delamination from an internal component-unit. The atomizer is made entirely of plastic, is of multifluid type, and comprises a return-spring having two curved arms, and a precompression valve-system.

## Description

The invention relates to a multilayer "container in container" receptacle, particularly to a multi-chamber one, and to a preform-set for making said receptacle. The invention also relates to a method for producing a multi-chamber multilayer "container in container" receptacle.

The invention additionally relates to an atomizer compatible with multi-chamber multilayer "container in container" receptacles, said atomizer being capable of dispersing at least two fluids.

The invention further relates to a system consisting of a multi-chamber multilayer "container in container" receptacle, and an atomizer, both components of said system being made according to this invention.

Multi-chamber receptacles allow storing inside a single receptacle of two or more substances; the dispensing of stored substances may take place either simultaneously or separately. Multi-chamber receptacles can have varied areas of use, one of the most common being that of cleaning chemicals - both household cleaning and commercial or industrial-type cleaning. Another area of use of multi-chamber receptacles could be - for example but not limited to - that of carbonated drinks.

In WO2009088285A1, a way to obtain two storage-compartments within a multilayer "container in container" receptacle is indicated. The said multilayer "container in container" receptacle consists of three constituent containers/ component-units: an external/ outermost component-unit, an intermediate component-unit and an internal/ innermost component-unit. Following a delamination of its external structure, within said "container in container" receptacle two storage-compartments may be obtained. One of the two storage-compartments is delimited by the inner surface of the walls of the internal component-unit, and a second one is flanked by both the exterior surface of the walls of the internal component-unit and the inner surface of the walls of the intermediate component-unit. Practically, after completing the liquid-bottling phase the internal component-unit - with the contained liquid - should be for the most part submerged in the liquid held by the intermediate component-unit. The two storage-compartments of said receptacle are therefore not individual. As an effect, it may be difficult to adequately manage the two liquids.

It is an object of present invention to deliver a multi-chamber multilayer "container in container" receptacle equipped with individual, independent, possibly symmetrical storage-compartments, said storage-compartments being capable of allowing separate management of contained liquids. The said receptacle should allow airless liquid-storing and 360 degrees operation of a dispensing system or device of which said receptacle may be a part, all without utilizing specialized additional components. It is equally an object of present invention to provide at least a method of producing said multi-chamber multilayer "container in container" receptacle. It is additionally an object of present invention to create an atomizer, of multifluid type - thus capable of dispersing at least two fluids simultaneously - and which said atomizer should be compatible with the previously indicated multi-chamber multilayer "container in container" receptacle, and which said atomizer may also be entirely made of plastic and from a small number of components. It is further an objective of present invention to create a dispensing system comprising a multi-chamber multilayer "container in container" receptacle, and an atomizer, of multifluid type, both components of said system preferably being of types indicated above in this particular paragraph.

According to the main embodiment of the invention, two storage-compartments can be obtained within a multilayer "container in container" receptacle (or CIC-type receptacle) consisting of three constituent containers/ component-units by transforming the internal/ innermost component-unit of a said CIC-type receptacle into a partitioning-system. For this purpose, ensuing a delamination process, certain lateral areas of the walls of said internal component-unit may be repositioned in the longitudinal median region of said CIC-type receptacle. This particular configuring stage of a CIC-type receptacle, which includes both of the previously indicated delamination and repositioning processes, may well be carried out during the liquid-bottling phase of a CIC-type receptacle, even utilizing the liquids being bottled. The partitioning-system hence obtained, a double-walled one, should hence separate two individual, independent, and possibly symmetrical storage-compartments located on the lateral sides of a said CIC-type receptacle.

To enable airless liquid-storing and 360 degrees operation of a dispensing system of which said CIC-type receptacle may be a part, a decrease in the volume of the storage-compartments should occur during the cycle-of-use. The said decrease may be accomplished by means of compressing those said storage-compartments. The said compressing may be achieved by delaminating and progressively repositioning certain lateral areas of the walls of the intermediate component-unit, which said walls partake in delimiting the storage-compartments.

Summary description of the Figures:
Fig. 1 perspective view of a dispensing system comprising a CIC-type receptacle and an atomizer
Fig. 2 exploded view of a preform-set
Fig. 3a-3c cross sectional perspective view of the component-preforms of a preform-set
Fig. 4a-4b perspective view of the upper-segment of a CIC-type receptacle
Fig. 5 perspective view of the upper-segment of an alternative CIC-type receptacle
Fig. 6a-6b schematically, a CIC-type receptacle in horizontal sectional views
Fig. 7 schematically, a CIC-type receptacle in a horizontal sectional view
Fig. 8-11 schematically, alternative CIC-type receptacles in horizontal sectional views
Fig. 12 exploded view of an atomizer
Fig. 13 side view of an assembled atomizer
Fig. 14 bottom view of the main body of an atomizer
Fig. 15 perspective view of some components of an atomizer
Fig. 16 perspective view of certain components of an atomizer, i.e. the spraying nozzle and the forepart region of the main body
Fig. 17 perspective view of the spraying nozzle of an atomizer
Fig. 18 cross sectional perspective view of the forepart region of the main body of an atomizer

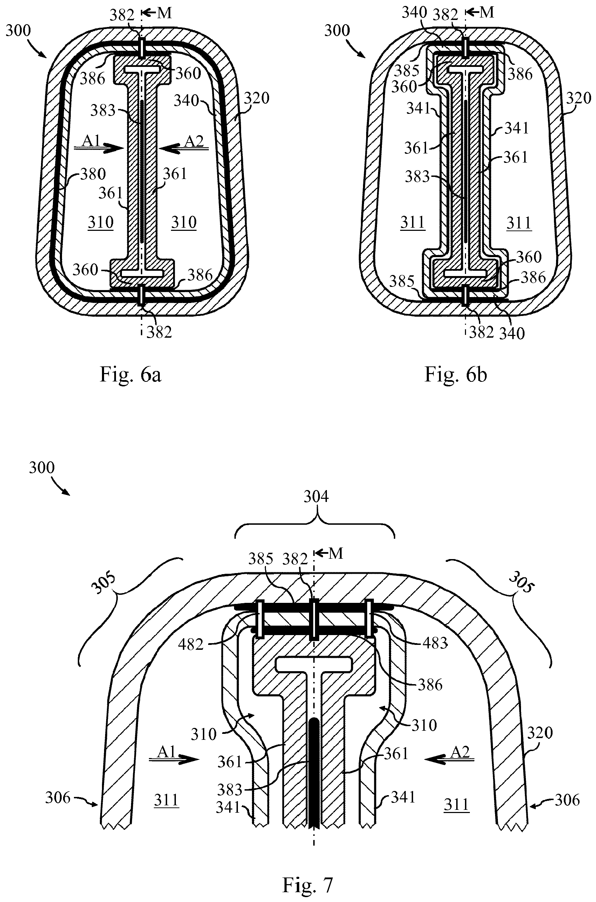

In the accompanying drawings, X represents the longitudinal axis, Y the lateral axis, and Z the vertical axis. In the description and illustrations (e.g. Fig. 6a-6b), M indicates the median (the middle) of a CIC-type receptacle, or a preform-set, or an atomizer, or a dispensing system, in relation to the longitudinal axis X. In the description, unless explicitly stated otherwise, *lateral* (parts, sides, areas etc.) signifies parts, components, areas, regions, sides etc. located on one side or the other of the median M.

In the description, a multi-chamber receptacle means a receptacle having therein more than a storage-compartment.

In the description, a multilayer "container in container" receptacle made according to this invention - essentially a multilayer/ composite/ laminate container, possibly a multi-chamber one - is predominantly called a *CIC-type receptacle.* The term *CIC-type receptacle* is used for such receptacles without regard to their configuration phase, i.e. both before and after the compartmentation.

Relative to the substances that could be stored in and dispensed from a CIC-type receptacle, the description refers in particular to liquids. However, the invention also applies to other types of substances with reduced molecular cohesion (other types of fluids, viscous substances etc.).

According to the invention, *"cycle-of-use"* means the period between starting using a CIC-type receptacle, or a system, or a device of which said receptacle may be a part, and the fluid-exhaustion of a said CIC-type receptacle.

According to the invention, the term *operation(s)* with its derivatives *operating, operate etc.,* may be used in relation to certain processes - such as, but not limited to, the repositioning or moving of certain parts, surfaces or components of a CIC-type receptacle - both during the *"cycle-of-use",* but also prior to that stage (i.e. while configuring the storage-compartments etc.).

In the description of the invention, transforming a preform or preform-set into a receptacle - a process that requires at least reheating, stretching and then the blowing - is called blow-molding.

### CIC-type receptacle details

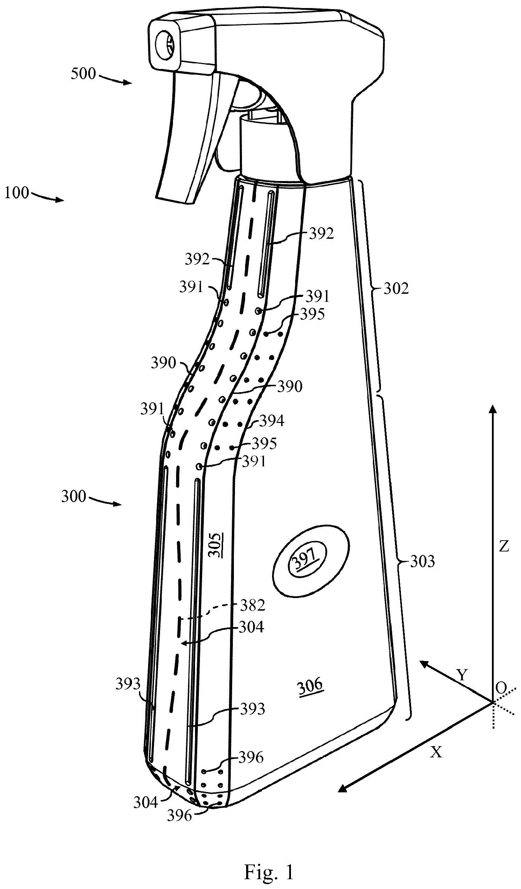

Fig. 1 illustrates a perspective view of a dispensing system 100 comprising a CIC-type receptacle 300 and an atomizer 500.

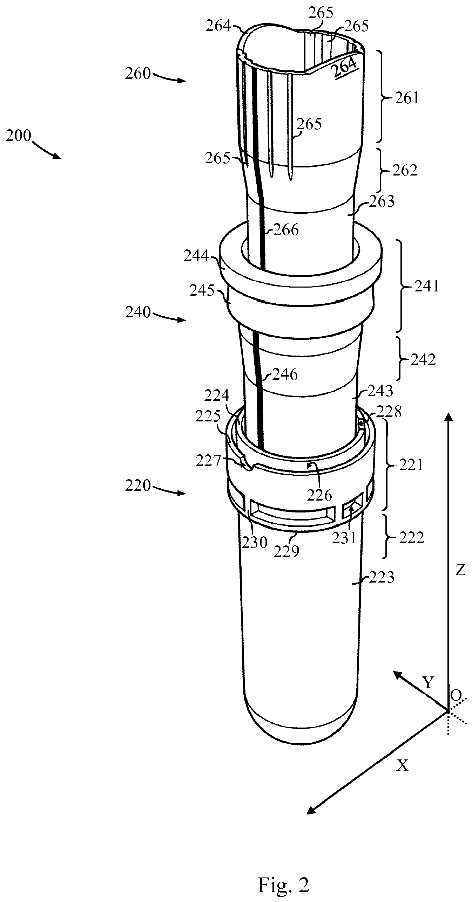

According to the main embodiment of the invention, a CIC-type receptacle 300 is composed of three constituent containers henceforward called component-units: one external component-unit (the outermost one), one intermediate component-unit (the middle one) and one internal component-unit (the innermost one). Said three component-units form together a multilayer/ composite/ laminate structure. A CIC-type receptacle 300 is obtained from a preform-set 200 (Fig. 2), following a blow-molding process.

The following section details a preform-set.

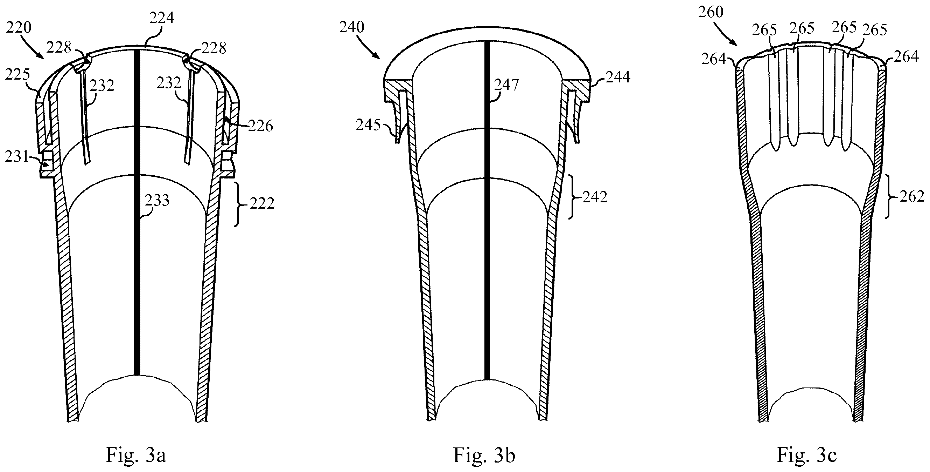

According to the main embodiment of the invention, the preform-set 200 is constituted by assembling the component-preforms: the external component-preform 220, the intermediate component-preform 240 and the internal component-preform 260, Fig. 2, Fig. 3a-3c.

In the geometry of the component-preforms 220, 240 and 260 may be identified a series of vertical segments with specific roles. The corresponding upper-segments 221, 241 and 261 may incorporate - right from the production phase of their respective component-preforms, i.e. 220, 240, and 260 - a number of functional elements required at least in one of the ensuing stages involving a CIC-type receptacle 300: blow-molding, compartmentation and/ or liquid-bottling, but also during the assembly and/ or use of a dispensing system 100. Examples of such functional elements are flange 229 and stiffening members 230, as well as grooves 265, which said grooves 265 are functional-forms acting as folding elements, Fig. 2 (the functional-forms will be detailed later). Other functional elements present at the level of the upper-segments 221, 241 and 261 will be identified as the description progresses.

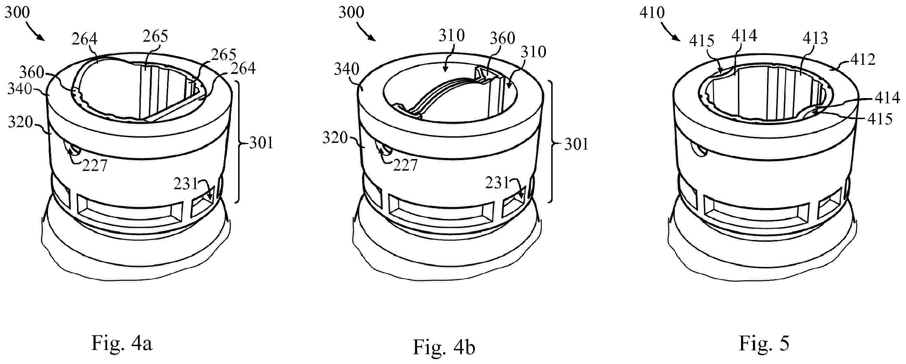

The corresponding upper-segments 221, 241, and 261 of the component-preforms 220, 240 and 260 are non-transformable during the blow-molding process. As a result, after assembling the preform-set 200 (not illustrated fully assembled), the geometry of the top end of said preform-set 200 - the part incorporating the upper-segments 221, 241, and 261 - should be identical to that of the upper-segment 301 of a CIC-type receptacle 300 (Fig. 4a).

The corresponding intermediate-segments 222, 242 and 262 of the component-preforms 220, 240 and 260 may be fashioned as transitional segments that tolerate certain shape transformations during the blow-molding process; functional elements possibly integrated into the structure of these segments may also suffer some shape transformations.

The corresponding lower-segments 223, 243 and 263 of the component-preforms 220, 240 and 260 allow extensive shape transformations during the blow-molding process.

The component-preforms 220, 240 and 260 can be manufactured individually by injection molding or by means of alternative methods - for example 3D printing. The component-preforms - all or only some of them - may also be produced as a unitary structure obtained via, for example but not exclusively, a sandwich-type injection.

The geometry of the component-preforms 220, 240 and 260 may differ from the circular shape illustrated in the drawings related to the description of the invention.

General geometry may differ from one component-preform - i.e. 220, 240 and 260 - to another.

Thereafter, when operating a CIC-type receptacle 300, a permanent-joint is needed between its component-units; the said permanent-joint should be carried out in the preform-set-phase of said receptacle.

The permanent-joint should be performed between at least two of the three component-preforms (i.e. 220, 240 and 260) of the preform-set 200 and it should subsequently emerge in the structure of a CIC-type receptacle 300 as permanent-joint 382 (Fig. 1).

The indicated permanent-joint 382 may preferably be executed on the median M of said preform-set 200 with adhesive and/ or welding, preferably vertically or substantially vertically.

If executing the permanent-joint with adhesive, said adhesive may be deposited in the form of lines or stripes located, for example, as follows (Fig. 2, Fig. 3a-3b): 233, on the inside of the external component-preform 220; 246 and 247, on the outside and respectively on the inside of the intermediate component-preform 240; 266, on the outside of the internal component-preform 260. In practice it is not necessary to execute all four lines or stripes 233, 246, 247 and 266.

Instead of executing the permanent-joint 382 with adhesive - or, possibly, in addition to using adhesive - within the preform-set 200 a permanent-joint can also be achieved by means of welding (not illustrated). The permanent-joint by welding can be executed as well on the median M of the preform-set 200, either after completion of a partial assembly - so between only two of the component-preforms (i.e. 220, 240 and 260) - or after the main assembly of the preform-set 200. Welding can be performed, for instance, by ultrasound, laser or other methods.

The preform-set 200 described above is subsequently subjected to a blow-molding process. The blow-molding process may be a conventional one, attained within a mold and using compressed air. As a result of the blow-molding process, the preform-set 200 is transformed into a CIC-type receptacle 300 (Fig. 1). The component-preforms of the preform-set 200 (i.e. external component-preform 220, intermediate component-preform 240 and internal component-preform 260) thus become the corresponding component-units of a CIC-type receptacle 300 (i.e. external component-unit 320, intermediate component-unit 340 and internal component-unit 360). Fig. 4a-4b illustrate the upper-segment 301 of such CIC-type receptacle 300, practically the neck area of said receptacle and the opening at the top of it.

According to the main embodiment of the invention, two storage-compartments can be obtained within a CIC-type receptacle 300 by transforming certain lateral areas of the walls of the internal component-unit 360 into a partitioning-system. Those said certain lateral areas of the walls of the internal component-unit 360 may stem from side-sections 306 of a CIC-type receptacle 300 and possibly also from slanted-sections 305. For the partitioning-system to be obtained, those certain lateral areas of said walls of the internal component-unit 360 should first be separated from the multilayer external structure of a CIC-type receptacle 300 - practically from the walls of the intermediate component-unit 340 - through a delamination process. Ensuing the delamination process, those certain lateral areas of the walls of the internal component-unit 360 are then forced towards the region of the median M of a CIC-type receptacle 300, following directions A1 and A2 (Fig. 6a). When those certain lateral areas of the walls of the internal component-unit 360 at least relatively reach the region of the median M of a CIC-type receptacle 300, a double-walled partitioning-system 361 is formed.

Concurrent with the formation of the partitioning-system 361, within a CIC-type receptacle 300 two storage-compartments 310 emerge in both lateral areas of said receptacle, between the walls of the partitioning-system 361 and the exterior lateral walls of the CIC-type receptacle 300.

The configuring of a CIC-type receptacle 300, a phase that includes both processes indicated above, i.e. the delamination and the repositioning of those certain lateral areas of the walls of the internal component-unit 360, may be carried out during the liquid-bottling stage of that said CIC-type receptacle 300, even utilizing the liquids being bottled.

Inside the two storage-compartments 310 of a CIC-type receptacle 300, liquid-storing should be airless, without contact between stored substances and the atmospheric air. Also, a dispensing system of which a CIC-type receptacle 300 may be a part - i.e. the dispensing system 100 - should be able to operate at 360 degrees without utilizing specialized additional components. To fulfill both the above criteria, the storing capacity of the storage-compartments 310 - essentially the volume of each such storage-compartment - should gradually decrease during the cycle-of-use, in proportion to the consumption of the liquids stored therein.

The said decrease in the storing capacity of the storage-compartments 310 may be accomplished by means of compressing those said storage-compartments 310 during the cycle-of-use. The said compressing may be achieved by delaminating and progressively repositioning - also on directions A1 and A2, towards the region of the median M - certain lateral areas of the walls of the intermediate component-unit 340, which said walls partake in delimiting the storage-compartments 310. Those said certain lateral areas of the walls of the intermediate component-unit 340 may stem from the side-sections 306 of a CIC-type receptacle 300 and possibly also from the slanted-sections 305. Once delaminated and set in motion, those certain lateral areas of the walls of the intermediate component-unit 340 from both lateral sides of a CIC-type receptacle 300 constitute, together, the compression-system 341 (Fig. 7). The compression-system 341 essentially squeezes, crushes, the storage-compartments 310 during the cycle-of-use.

Concurrent with the compressing of the storage-compartments 310, the void-spaces 311 should progressively emerge on the other side of the walls of the compression-system 341. The said void-spaces 311 should thus be formed between the walls of the compression-system 341 and the walls of the external component-unit 320 (Fig. 6b and Fig. 7). The said void-spaces 311 may be filled with atmospheric air just as they develop.

The compression-system 341 - in contrast to the rapid configuration of the partitioning-system 361 - exhibits a progressive, slow operation, throughout the entire cycle-of-use of a CIC-type receptacle 300. In essence, the action of the compression-system 341 on storage-compartments 310 represents an effect of the internal pressure balancing process inside a CIC-type receptacle 300. At the end of the cycle-of-use of a CIC-type receptacle 300, the fluid-exhaustion of storage-compartments 310 should lead to the actual complete disappearance of said storage-compartments 310; the walls of the compression-system 341 should thus end up by being superimposed over those of the partitioning-system 361 (Fig. 6b).

Those said certain lateral areas of the walls of both the internal component-unit 360 and the intermediate component-unit 340 from which derive both the partitioning-system 361 and, respectively, the compression-system 341, will hereafter be also referred to as mobile-sectors.

As already shown, the mobile-sectors of both the internal component-unit 360 and the intermediate component-unit 340 emerge by means of delamination of the multilayer exterior structure of a CIC-type receptacle 300. Ensuing the delamination process, the mobile-sectors are subjected to a repositioning process within said CIC-type receptacle 300. Preferably, both the above-mentioned processes involving the mobile-sectors - i.e. delamination and repositioning - should occur in a controlled manner.

In order to facilitate the controlled delamination and repositioning of the mobile-sectors, the multilayer external structure of a CIC-type receptacle 300 should preferably feature:
- operational-sections, that is to say sections of the external structure of a CIC-type receptacle 300 (e.g. mid-section 304; slanted-sections 305; side-sections 306; the bottom region of the receptacle) apt to undertake specific tasks during the operation of said receptacle, including in the pre-cycle-of-use phase;
- functional-forms, that is to say particular three-dimensional features/ design-characteristics embedded in the external structure of a CIC-type receptacle 300 (e.g. 392, 395, 397 etc.) capable of exerting specific functional tasks;
- a connecting-system that may incorporate several components, among which, at least: a permanent-joint (e.g. 382) and a residual interface (e.g. 386, Fig. 6a) - both detailed later;
- an adequate degree of adhesion of the interfaces formed between the walls of the component-units 320 and 340, and, respectively, 340 and 360;
- an adequate degree of resilience of the structure of the internal component-unit 360 and, possibly, of the intermediate component-unit 340.

The elements outlined above are detailed in the subsequent parts of the description.

The operational-sections of a CIC-type receptacle 300 may include:
- the mid-section 304 - present in the proximity of the longitudinal median M, accommodates the connecting-system present between the component-units (i.e. 320, 340 and 360);
- the side-sections 306 - present in the lateral areas, generate via delamination the main part of the mobile-sectors; said side-sections 306 may be the first ones to be delaminated;
- the slanted-sections 305 - disposed between mid-section 304 and side-sections 306, may produce if necessary, also via delamination, the peripheral areas of the mobile-sectors; slanted-sections 305 may be delaminated after side-sections 306;
- the bottom region of the receptacle, meaning the lower region containing the specific horizontal surface of the receptacle on which said receptacle is able to stand; some other operational-sections of a CIC-type receptacle 300 may extend through the bottom region, e.g. mid-section 304, slanted-sections 305 (the bottom region is not illustrated separately).

The operational-sections may be delimited via (i) certain types of functional-forms inserted in the external structure of a CIC-type receptacle 300 and also by means of (ii) general design of said receptacle.

The functional-forms are detailed below.

A CIC-type receptacle produced according to present invention is fundamentally a multilayer structure. Any significant three-dimensional feature present on the surface of the external component-unit of a said CIC-type receptacle - imprinted, embossed etc. - should therefore mark the structure of all of the component-units therein. Any such said significant three-dimensional feature will be referred to as a functional-form if it exerts a specific functional task throughout the operation of said CIC-type receptacle.

Functional-forms may be involved, for example, in demarcating the operational-sections (e.g. 304, 305 and 306) from one another, help control the delamination process within the structure of some said operational-sections (e.g. side-sections 306, and perhaps slanted-sections 305 if the latter also require delamination), and should also facilitate the ensuing repositioning process of the mobile-sectors thus obtained.

When delaminating a region appertaining to an operational-section (e.g. 306) a functional-form (e.g. 397) incorporated therein becomes separated into at least two corresponding functional-forms, one for each separated layer(s). After delamination, each corresponding functional-form thus obtained may operate independently from the remaining one(s) - that is to say, the one(s) with which it previously formed a multilayered structure and from which it has been separated.

Design-wise, functional-forms could be any geometrical elements and/ or patterns having three-dimensional profiles; so functional-forms may be defined in that they:
- can have (i) simple, elementary or (ii) complex shape(s)
- may interact, meaning that they:
   ∘ can be intersected
   ∘ can be associated
   ∘ can form simple or elaborate patterns
- can be inserted in any section and/ or region of a CIC-type receptacle
- can be extended/ continued from one section and/ or region to another
- can be of (i) imprinted-type (engraved) and/ or of (ii) embossed-type (raised)
- may have varied three-dimensional profiles:
   ∘ the imprints of some may have different depths compared to adjacent ones
   ∘ one and the same imprint may record depths of different values from one area to another;
      (similar principles also apply to embossed-type functional-forms).

Operation-wise, functional-forms may be (i) passive and (ii) active and may facilitate the functioning of a CIC-type receptacle throughout all its operating phases, both before and during the cycle-of-use.

Passive functional-forms are non-responsive elements in the sense that (a.) do not require or (b.) do not make use of the structural resilience or elasticity of the surfaces in which they are incorporated. Passive functional-forms may be employed for instance (I.) to reinforce the interfaces between the component-units of a CIC-type receptacle, especially in the area of the connecting-system (e.g. circular elements 391 and linear elements 392 and 393, Fig. 1, on the surface of the mid-section 304); and/ or (II.) to act as folding elements, contributing to the controlled plastic deformation of certain surfaces along specific coordinates (e.g. edges 390 and 394, Fig. 1, used to demarcate operational-sections 304 and 305 and, correspondingly, 305 and 306).

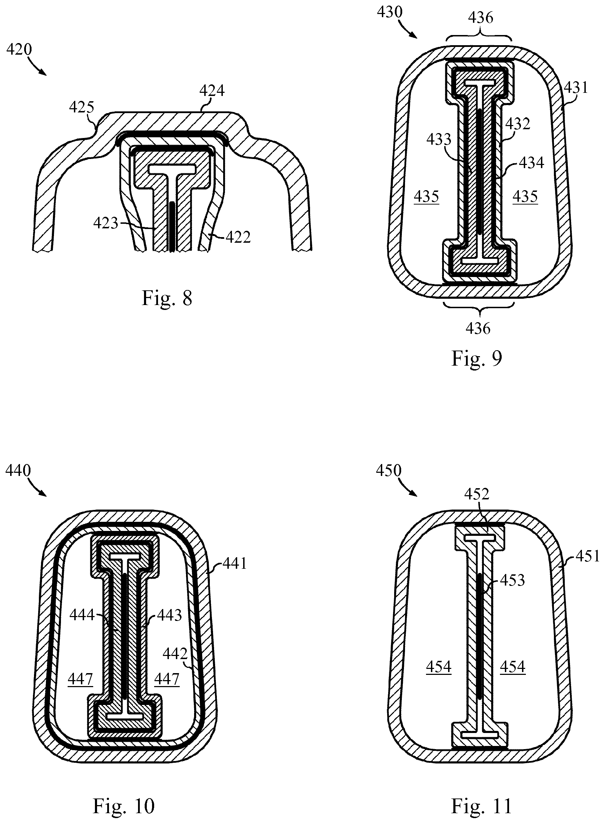

Passive functional-forms are also shown in Fig. 8, which illustrates an alternate CIC-type receptacle 420. The oblique walls 425 of the projections 424 fall in the category of embossed-type (raised) functional-forms. In this case, the oblique walls 425 mark a limit between the operational-sections of the alternate CIC-type receptacle 420, constituting an obstacle in delaminating the component-units 423 and 422 by abruptly changing the angle of separation of their walls from the initial multilayer structure. The oblique walls 425 act both as folding elements for the mobile-sectors of a CIC-type receptacle 420 and as reinforcing elements for certain areas of the interfaces present between the component-units of a CIC-type receptacle 420.

When used as folding elements, the passive functional-forms work essentially as embedded hinge-type mechanisms.

The second category of functional-forms is represented by the active ones, which should be mainly present in the delaminating section(s) of a CIC-type receptacle - the section(s) where the mobile-sectors stem from. In the case of a CIC-type receptacle 300, examples of said active functional-forms are oval elements 397 on side-sections 306, and dot-like element-groups 395 and 396 on slanted-sections 305 (Fig. 1).

The active functional-forms are responsive elements able to react to modifications in their environs. Hence, by making use of their (i) specific geometry and the (ii) resilience of the structure in which they are embedded, the active functional-forms can actively - dynamically - determine a change in (a.) the shape and/ or (b.) the path of movement of the mobile-sectors during an operating phase. For example, but not limited to, active functional-forms may enact (e.g. oval elements 397) surface flexing on preset coordinates, or may facilitate (e.g. the corrugated-types - not illustrated) either compression or extension, to a certain degree, of the surfaces in which they are embedded etc... Hence, the active functional-forms fall in the category of embedded mechanisms. For instance, embedded mechanisms fashioned from active functional-forms are the above-mentioned oval elements 397, on side-sections 306 of a CIC-type receptacle 300.

Moreover, depending on their above-indicated (i) specific geometry, and the (degree of) (ii) resilience of the structure in which they are embedded, some active functional-forms may exhibit a non-linear behavior, possibly of bi-stable or multi-stable nature. In such case, those particular (a.) non-linear active functional-forms, and/ or the (b.) mobile-sectors in which they are embedded (e.g. the mobile-sectors from which the partitioning-system 361 derives) fall in the category of compliant-mechanisms, since they: (i) possess structural resilience; (ii) have the ability to transmit in a controlled manner, by means of elastic deformation, movement and energy from one region to another of their own structure; (iii) fulfill specific tasks.

For instance, compliant-mechanisms fashioned from non-linear active functional-forms are the oval elements 397 on side-sections 306 of a CIC-type receptacle 300, either as they stand or possibly modified - e.g. possibly disposed in a more elaborate pattern perhaps boasting both imprinted and embossed three-dimensional profiles etc...

For instance, additionally, compliant-mechanisms fashioned from mobile-sectors are the walls of the partitioning-system 361 of a CIC-type receptacle 300, since said walls can integrate and make use of non-linear active functional-forms such as oval elements 397, either as they stand or possibly modified - e.g. possibly disposed in a more elaborate pattern perhaps boasting both imprinted and embossed three-dimensional profiles, and also possibly part of - or working with - a larger group of functional-forms etc...

Regarding the specific use of such compliant-mechanisms, they can prove particularly advantageous for a precise repositioning process and an exact final placing of the walls of the partitioning-system 361; among the mobile-sectors, said walls of the partitioning-system 361 should be the ones to boast a higher degree of structural resilience and thus to be more suited to work as compliant-mechanisms. Even so, such compliant-mechanisms should also relate to other mobile-sectors.

Regarding the making of the functional-forms, some of them can be executed prior to the blow-molding phase of a CIC-type receptacle 300. For example, vertical grooves 265 (Fig. 2, Fig. 3c, Fig. 4a) - which act as folding elements facilitating shifting of petaloid protrusions 264 (process detailed later) - can be executed during the injection molding phase of the internal component-preform 260 of the preform-set 200. Also, certain functional-forms executed during the blow-molding phase of a CIC-type receptacle 300 can be produced as extensions/ additions to some functional-forms already embedded during the injection molding phase of the component-preforms of the preform-set 200.

The few types of functional-forms, spinoff mechanisms and entailed processes thereof are revealed as examples only and shall not in any way restrict the scope of protection claimed by present invention.

The following section details a connecting-system.

A CIC-type receptacle 300 preferably comprises a connecting-system between at least two of its component-units, for instance between the internal component-unit 360 and the intermediate component-unit 340. A connecting-system may facilitate the configuring of the partitioning-system 361 and the concurrent emergence of at least two storage-compartments 310 in the lateral areas of a said CIC-type receptacle 300. A connecting-system may also enable the accurate operation of a said CIC-type receptacle 300 during the cycle-of-use.

The connecting-system may preferably be positioned in the region of the median M of a CIC-type receptacle 300 and its general geometry may preferably coincide with the general geometry of the mid-section 304 (Fig. 1) which should have - inter alia - at least some of the following positional and geometrical characteristics:
- it should be located in the proximity of the median M of a CIC-type receptacle 300, on the full height and essentially following the longitudinal outline of a said receptacle except for the opening at the top
- its width may vary from one region to another (front, rear, bottom region) as well as within the same region of a CIC-type receptacle 300
- its contour may be emphasized/ accentuated, both by means of general design of a CIC-type receptacle 300 and the use of specific functional-forms.

The connecting-system may consist of the following two main elements which should have complementary roles:
- (i) a permanent-joint 382, to help separate storage-compartments 310 from one another effectively and permanently
- (ii) residual interfaces, to facilitate accurate shaping of storage-compartments 310

Certain functional-forms, especially of passive type, may as well be part of the connecting-system.

Between the two main elements of the connecting-system, the permanent-joint 382 (Fig. 1) is the one to provide effective and permanent separation of the storage-compartments 310 of a CIC-type receptacle 300. Permanent-joint 382 may preferably be present at least between the intermediate component-unit 340 and the internal component-unit 360, but it may be practiced between all three component-units of a CIC-type receptacle 300, as illustrated in Fig. 6a-6b and Fig. 7.

The permanent-joint 382 can be integrated into the structure of a CIC-type receptacle 300 right from the manufacturing phase of the preform-set 200, as previously shown.

As an effect of transforming the preform-set 200 into a CIC-type receptacle 300 through a blow-molding process, the permanent-joint 382 is unlikely to preserve its initial position - on the median M of the said receptacle - at the completion of that said blow-molding process; its final geometry may therefore become sinuous, such as illustrated in Fig. 1. For more details, in Fig. 7 are indicated the alternate positions 482 and 483 in which a permanent-joint 382 may finish up as a result of the blow-molding process.

With respect to the configuring process of the partitioning-system 361 and the concurrent emergence of the storage-compartments 310, the sinuosity of the permanent-joint 382 may prove, however, totally irrelevant. In order to serve its purpose, the permanent-joint 382 just needs to remain within the margins of the connecting-system as a whole. Explicitly, as long as the lateral profile of said sinuosity of the permanent-joint 382 - the total width of the sinuosity on the lateral axis Y - falls within the width of the mid-section 304, preferably on the full height of a CIC-type receptacle 300, the permanent-joint 382 is superimposed in its entirety over the residual interfaces, and so it remains within said margins of the connecting-system as a whole.

The following paragraphs detail the residual interfaces.

Residual interfaces detailed herein represent the second main component of the aforementioned connecting-system. The residual interfaces represent the largest component of the connecting-system in terms of covered area and therefore the general geometry of the residual interfaces may coincide with that of the entire connecting-system and further with that of the mid-section 304 of a CIC-type receptacle 300. The residual interfaces may be present either on the entire surface of the mid-section 304, forming a continuous structure, or only in certain regions therein.

As a result of the blow-molding process through which a CIC-type receptacle 300 is obtained, between the walls of the component-units 320 and 340, and correspondingly 340 and 360 are formed adhesive contact surfaces, interfaces.

The initial interface 380 is formed between the external component-unit 320 and the intermediate component-unit 340 (Fig. 6a); a similar (not illustrated) initial interface is also formed between the intermediate component-unit 340 and the internal component-unit 360.

Thereafter, the configuration of the partitioning-system and the concurrent emergence of the storage-compartments 310, but also the subsequent operation of a CIC-type receptacle 300, all might require: (i) the suppression of the interfaces across most or all parts of the side-sections 306, and possibly also within the slanted-sections 305; and (ii) the preservation of the interfaces across most or all parts of the mid-section 304. Moreover, configuring/ operating a CIC-type receptacle 300 might also require the suppression of the interfaces across most or all parts of the bottom region (region not illustrated separately) of a said CIC-type receptacle 300.

The interfaces between the intermediate component-unit 340 and the internal component-unit 360 may be suppressed during the liquid-bottling phase; also, they may be suppressed partially or in all necessary areas prior to this phase. The interfaces between the external component-unit 320 and the intermediate component-unit 340 may be suppressed during the cycle-of-use of a CIC-type receptacle 300 or of a system or device comprising a said CIC-type receptacle 300; also, they may be suppressed partially or in all necessary areas prior to this phase, either before or alongside or after liquid-bottling.

In the illustrations, the segments 385 (Fig. 6b and Fig. 7) represent fragments of the original interface 380 (Fig. 6a) between the component-units 320 and 340; as a whole, they will be called the residual interface 385. Additionally, the segments 386 (Fig. 6a-6b and Fig. 7) represent fragments of the original interface (not illustrated, as already shown) between the component-units 340 and 360; as a whole, they will be called the residual interface 386. The residual interfaces 385 and 386 should be able to exert contact between the corresponding component-units through their adhesive properties. The adhesive properties of the residual interfaces 385 and 386 should directly derive from the adhesive properties of the initial interfaces.

The degree of adhesion of the initial interfaces may be adjusted in several ways, but mainly by: the choice of plastics from which the component-units of a CIC-type receptacle 300 are made; the introduction of certain adhesives (or, on the contrary, of separating agents) in those plastics; depositing adhesives (or, on the contrary, separating agents) between the component-preforms of a preform-set 200 (possibly only between certain preforms or only in certain regions between those preforms - for example inside of what later becomes the upper-segment 301 of CIC-type receptacle 300) etc... So, the degree of adhesion may vary from one interface to another and within each individual interface, depending on the region.

As specified previously, in order to reinforce the residual interfaces 385 and 386 functional-forms may also be employed, especially passive-type ones (e.g. circular elements 391 and linear elements 392 and 393 on the surface of the mid-section 304, all illustrated in Fig. 1).

In certain embodiments, the connecting-system can possibly be made using elements from a single main category of the above indicated ones, either a permanent-joint or residual interfaces.

The next paragraphs detail using a connecting-system to operate a CIC-type receptacle 300.

With a permanent-joint 382 possibly ending up as being a relatively winding component, a CIC-type receptacle 300 needs other - more precise - delimiting element(s) as boundary/ boundaries between the partitioning-system 361 and the rest of the external structure of said receptacle and, implicitly, also between the two storage-compartments 310.

For a said CIC-type receptacle 300, edges 390 - which form the boundaries between the mid-section 304 and the slanted-sections 305 on each lateral side - are, physically, the closest elements to the median M having a distinct and dependable geometry. Hence, said edges 390 could be used to accurately delimit the partitioning-system 361 from the rest of the external structure of a said CIC-type receptacle 300. Using said edges 390 as delimiting elements on both lateral sides of a CIC-type receptacle 300 means that the whole mid-section 304 becomes the separating element - exerting its role via the in-built residual interfaces 385 and 386 - between the partitioning-system 361 and the rest of the external structure of said CIC-type receptacle 300.

When employing the whole mid-section 304 as a separating element, the conformation of the partitioning-system 361 - and later that of the compression-system 341 - may need adjustments. Therefore, for both of the walls of the partitioning-system 361, certain segments of their peripheral areas may need to be folded and placed underneath their respective half of mid-section 304 (from an outside to inside viewpoint); once folded, said segments should be at least partially concealed by mid-section 304. Similarly, the functioning of the compression-system 341 may as well require that certain segments of the peripheral areas of both its walls to be folded and subsequently positioned beneath mid-section 304. The above-indicated folding processes for both the partitioning-system 361 and the compression-system 341 may be performed on specific coordinates and may be facilitated, for example, via the use of passive functional-forms such as edges 390 and 394 (Fig. 1). For both the partitioning-system 361 and the compression-system 341, the above-indicated certain segments of the peripheral areas may stem from the slanted-sections 305, but also from some regions of the side-sections 306 bordering the slanted-sections 305.

The two categories of components of the connecting-system - the permanent-joint 382, on the one hand, and the residual interfaces 385 and 386, on the other hand - by being overlaid in the region of the mid-section 304, reciprocally offer one another error margins with regard to the manufacturing and operation. Thus, the permanent-joint 382 may have a sinuous final contour as an effect of the blow-molding process, but visually and functionally should be covered by the residual interfaces 385 and 386 and their host area i.e. mid-section 304. Conversely, the residual interfaces 385 and 386 may be suppressed, e.g. via a delamination process ensuing perhaps an accidental deformation of the receptacle, but without being affected the functionality of said partitioning-system 361 as a whole. Any delamination of the residual interfaces 385 and 386 should ultimately be blocked by the permanent-joint 382 - irrespective of its precise location on mid-section 304 - thus safeguarding the partitioning-system 361 as a whole and avoiding a potential mixing of the liquids present in the lateral storage-compartments 310.

The next paragraphs succinctly identify a number of other constraining factors in the operation of a CIC-type receptacle 300.

In addition to the factors hitherto detailed in the description, there are also a series of other factors coercing the repositioning process and also both the final position and the final shape of the mobile-sectors of a CIC-type receptacle 300. These supplementary factors affecting the operation the of said mobile-sectors are build-class factors and some of them are listed below:
- the overall profile of a CIC-type receptacle; i.e. the shapes and proportions of the vertical segments 302 and 303 of a CIC-type receptacle 300 taken as a whole (Fig. 1);
- the boundary geometry of the mobile-sectors; said boundary geometry of the mobile-sectors may match closely the contour lines of the connecting-system and, implicitly, the contour lines of the mid-section 304;
- the absence of free-moving margins; the boundaries of the mobile-sectors are attached to the multilayer structure of a CIC-type receptacle through the connecting-system.

The above-listed build-class factors are essential in the functioning of certain body-types of mobile-sectors especially relative to (i) the final position, and (ii) the final shape of those said certain body-types of mobile-sectors.

More specifically, in some embodiments of the invention it could be more advantageous for the walls of a compression-system (e.g. compression-system 341 of CIC-type receptacle 300) to be fashioned as thin membranes, with little or no resilience, elasticity or structural capacity. Nonetheless, due to the coercive nature of those said build-class factors listed above, these membrane-type compression-system walls may still function regularly - akin to a compression-system boasting structural resilience - especially with regard to their final position and final shape at the end of the repositioning process. Explicitly, when the cycle-of-use of a CIC-type receptacle ends, the membrane-type compression-system walls should result in being superimposed in quite a precise manner over the walls of the partitioning-system (e.g. partitioning-system 361 of CIC-type receptacle 300) simply because, due to those said build-class factors listed above, that is the sole final position they can reach. Additionally, because of the same coercive factors, the said membrane-type compression-system walls may reach that said sole final position only by assuming that particular shape they finally end-up in. As indicated, the above case with all steps involved should fully apply to a compression-system 341 of a CIC-type receptacle 300.

The following section details other elements related to the production of a CIC-type receptacle.

According to the main embodiment of present invention, the component-units of a CIC-type receptacle 300 preferably exhibit, structurally, different properties, which said properties may be individually suited to the functional needs of each component-unit (i.e. 320, 340 and 360).

The walls of the external component-unit 320 may preferably have high enough thickness and strength to ensure the structural strength of the whole assembly. The external component-unit 320 may be realized, for example but not exclusively, of PET plastics (polyethylene terephthalate).

The walls of the internal component-unit 360 may preferably have high enough thickness and strength to provide the structural strength required for the partitioning-system 361. The configuring of said partitioning-system 361 should take place on the production/ bottling line, so there should be enough energy available for running the delamination and repositioning processes irrespective of the thickness and strength of the material of the internal component-unit 360. The internal component-unit 360 may be hence realized, for example but not exclusively, also from PET-type plastics.

The walls of the intermediate component-unit 340 may preferably have less thickness and strength. The repositioning of the walls of the compression-system 341 - practically an effect of the internal pressure balancing within a CIC-type receptacle - occurs during the cycle-of-use, when the amount of available energy may be limited. The intermediate component-unit 340 may be realized, for example but not exclusively, from PP-type plastics (polypropylene).

In order to further reinforce a CIC-type receptacle 300, the two walls of the partitioning-system 361 may be bonded together by joint 383 (Fig. 6a-6b and Fig. 7), either in part or on all the height of a CIC-type receptacle 300. The joint 383 may be executed, for example but not exclusively, with adhesive. Depositing the adhesive on the inner surface of the walls of the partitioning-system 361 may precede the partitioning of a CIC-type receptacle 300 or it may be carried out alongside this process; the dimensions, shape and number of elements forming the joint 383 may vary.

During bottling, preferably - but not obligatory - the two liquids are introduced concurrently in a CIC-type receptacle 300. The parameters of the bottling process (liquid velocity, pressure etc.) can be dynamically adjusted throughout the liquid introduction - even separately for each liquid - to facilitate the configuring process (i.e. delamination and repositioning of the mobile-sectors) of the partitioning-system 361.

As liquid-consumption from storage-compartments 310 occurs, balancing the internal pressure within a CIC-type receptacle 300 may be achieved using atmospheric air. The atmospheric air may access the interior of a CIC-type receptacle 300 via the top of said receptacle, through an air-access mechanism whose elements may be incorporated in the region of the upper-segment 301. The elements of said air-access mechanism may be typically formed in the manufacturing phase of the component-preforms of the preform-set 200.

The enclosure 226 (Fig. 2 and Fig. 3a) of said air-access mechanism may be located between the inner circular wall 224 and outer circular wall 225 present at the top of the external component-preform 220 and consequently also at the top of the external component-unit 320. When assembling the preform-set 200, the flexible circular flap 245 (Fig. 2 and Fig. 3b) - which may be attached to the intermediate component-preform 240 (consequently, also to the intermediate component-unit 340) - should be inserted in the enclosure 226. Flange 244 (Fig. 2 and Fig. 3b) adjacent to the flexible circular flap 245, closes the enclosure 226 at the top.

The flexible circular flap 245 acts as a check valve: it allows air intake, but not air evacuation from a CIC-type receptacle 300. Atmospheric air enters the enclosure 226 through dent 227 practiced in the outer circular wall 225 (there may be several such dents). Normally, the lower, free-moving, edge of the flexible circular flap 245 should be in contact with the inner surface of the outer circular wall 225, below the level of dent 227. When necessary, forced by a pressure differential between the inner and outer surfaces of its body, the flexible circular flap 245 flexes allowing air intake.

After passing the flexible circular flap 245, the atmospheric air reaches, via dents 228, between the external component-unit 320 and the intermediate component-unit 340, thus feeding the two void-spaces 311 (Fig. 6b). Dents 228 should be present at the top of the inner circular wall 224, and may be continued downwardly by means of grooves 232 (Fig. 3a).

The internal pressure within a CIC-type receptacle 300 may be the same at all times in both void-spaces 311 and in both storage-compartments 310: the enclosure 226 should be common to both lateral areas of a CIC-type receptacle 300 and thus it should allow free fluid-communication between the void-spaces 311, through the two dents 228.

Alternatively, the inner circular wall 224 may be omitted in certain configurations; in such case an enclosure 226 may be formed, for example, between the outer circular wall 225 and the circular wall of the upper-segment 241 of the intermediate component-preform 240 and thus of the corresponding intermediate component-unit 340.

Alternatively, some elements of the air-access mechanism may be produced as separate components, for example: a detached flexible circular flap, an independent closure element that can replace flange 244 etc...

Alternatively, the flange 244 may be omitted completely; in such case the dent 227 may also be omitted.

Fitting the atomizer 500 (Fig. 1) to a CIC-type receptacle 300 can be achieved via the recesses 231 (Fig. 4b) positioned in the area of the upper-segment 301 of a said CIC-type receptacle 300.

The following section discloses alternative CIC-type receptacles, and also alternative components, features and processes related to a CIC-type receptacle besides the alternatives mentioned hitherto.

Alternatively, a CIC-type receptacle made according to present invention may also come in shapes other than those shown in the illustrations related to the description - for example it may be substantially cylindrical, the base may have a petaloid form etc. Such an alternate CIC-type receptacle may still have all or at least part of the components and characteristics of a CIC-type receptacle 300, including a connecting-system, a partitioning-system, a compression-system, operational-sections and functional-forms etc...

Alternatively, the invention also depicts a CIC-type receptacle 430 (Fig. 9) - derived from the main embodiment-which, however, requires the liquid-bottling taking place between the walls of the external component-unit 431 and the walls of the intermediate component-unit 432. The lateral walls of component-units 432 and 433, connected by interface 434, can move unitarily towards the longitudinal median of a CIC-type receptacle 430 forming a double-walled partitioning-system - each of the walls of the partitioning-system should therefore have a multilayer structure. Two storage-compartments 435 are hence formed in the lateral areas of a CIC-type receptacle 430. A connecting-system possibly akin to that of a CIC-type receptacle 300 should preferably be present in the mid-section 436 of said CIC-type receptacle 430.

In operation, the lateral walls of the intermediate component-unit 432 secede from those of the internal component-unit 433 and move towards the walls of the external component-unit 431. As an alternate solution, the lateral walls of the intermediate component-unit 432 and those of the internal component-unit 433 may be separated before the cycle-of-use phase.

For balancing the internal pressure within a CIC-type receptacle 430, atmospheric air may be introduced between the component-units 432 and 433; in this respect, an air-access mechanism (not illustrated) possibly derived from that of a CIC-type receptacle 300 may be used. If present, such air-access mechanism should be suitably adapted, e.g. the flexible circular flap and, equally, the flange closing the enclosure containing the flexible circular flap, should be produced separately and inserted only after the liquid-bottling process, precisely to allow this said process to occur.

Alternatively, the invention also features a CIC-type receptacle 440 (Fig. 10) consisting of four component-units. The liquids are introduced between the two intermediate component-units 442 and 443. The multilayer partitioning-system consists of the lateral walls of the intermediate component-unit 443 and those of the internal component-unit 444; the storage-compartments 447 are formed in the lateral areas. In operation, for example, the walls of the intermediate component-unit 442 secede from those of the external component-unit 441 and move towards the partitioning-system; the walls of the intermediate component-unit 443 secede from those of the internal component-unit 444 moving towards the lateral exterior walls of the CIC-type receptacle 440. If present, an air-access mechanism should be suitably adapted.

Alternatively, the invention also features a CIC-type receptacle 450 (Fig. 11) consisting of only two component-units, the external component-unit 451 and the internal component-unit 452. The walls of the partitioning-system should be obtained by delaminating and repositioning the lateral walls of the internal component-unit 452 (possibly in a manner similar to the configuration of the internal component-unit 360 of a CIC-type receptacle 300). A CIC-type receptacle 450 can have several functional variants.

In a first embodiment, a CIC-type receptacle 450 offers two lateral storage-compartments 454 with fixed geometry - the walls of the partitioning-system are not mobile; the joint 453 may be present between the walls of the partitioning-system to stiffen the assembly.

In another embodiment, the walls of the partitioning-system may be mobile. Thus, said walls of the partitioning-system could also act as a compression-system for the storage-compartments 454. In operation, said walls may return - in step with the consumption of liquids - towards the lateral walls of the external component-unit 451, hence producing the storing capacity decrease of the storage-compartments 454; the joint 453 may be omitted if the latter technical solution is adopted.

Alternatively, it may also be provided a CIC-type receptacle (not illustrated) - derived from a CIC-type receptacle 450 (Fig. 11) - which may have a single inner storage-compartment formed between the walls of the external and internal component-units; in this case, a connecting-system between those two component-units of such CIC-type receptacle should be, at least in part, omitted, hence facilitating free fluid-communication between the lateral storage areas within the receptacle.

Alternatively, it may also be provided a CIC-type receptacle (not illustrated) which may partially be similar to conventional CIC-type receptacles. The said CIC-type receptacle made according to present invention may therefore boast two component-units and a single storage-compartment created inside its internal component-unit. By contrast to conventional ones, such said CIC-type receptacle formed in accordance with present invention should be able to incorporate in its external multilayer structure and also make use of: (i) at least one operational-section and/ or (ii) at least one functional-form, possibly of compliant-mechanism-type, elements described previously in relation to CIC-type receptacle 300. Furthermore, such said CIC-type receptacle formed in accordance with present invention may also incorporate, at least in certain embodiments, a connecting-system between its component-units. The said connecting-system may be similar to that of a CIC-type receptacle 300, it may consist of a least one permanent-joint and/ or one residual interface and, additionally, said connecting-system may also be reinforced with dedicated functional-forms.

Alternatively, it may also be provided a CIC-type receptacle (not illustrated) with more than two storage-compartments. Such alternative CIC-type receptacle could be made as well out of three component-units - similar to a CIC-type receptacle 300 - but, due to different partitioning, it may have more than two storage-compartments: for example, a storage-compartment may be created between the walls of the partitioning-system. A CIC-type receptacle with more than two storage-compartments may also be obtained from a number of component-units other than three. For example, it could be similar to a CIC-type receptacle 440, but with supplementary storage-compartments between the walls of the partitioning-system.

Alternatively - for any of the multi-chamber constructive variants - the storage-compartments may have different volume sizes and/ or may be asymmetrical (variants not illustrated).

Alternatively, the partitioning-system of a CIC-type receptacle can be positioned on coordinates other than those presented in the main embodiment of the invention. For example, the partitioning-system may intersect the longitudinal median of a said CIC-type receptacle.

Alternatively, it may also be provided a CIC-type receptacle similar to a CIC-type receptacle 300 in that it may comprise three component-units, but in contrast it may have storage-compartments communicating with each other. The connecting-system between the component-units of such CIC-type receptacle may be a partial one; such CIC-type receptacle may be hence susceptible to store a single type of fluid.

Alternatively, balancing the internal pressure over the cycle-of-use of a CIC-type receptacle may also be achieved by introducing a pressurized fluid inside dedicated areas of said receptacle (dedicated areas similar to void-spaces 311 of a CIC-type receptacle 300), a solution in particular applicable to a CIC-type receptacle packing pressurized liquids (carbonated beverages etc...).

Alternatively, various components, processes and features associated with CIC-type receptacles shown above may be combined to obtain variants of such CIC-type receptacles; the invention does not insist on them additionally, many combinations being evident.

The following paragraphs provide a least one configuring method for obtaining both a partitioning-system and the storage-compartments within a CIC-type receptacle 300.

In the first stage it is provided a previously detailed CIC-type receptacle 300 in the state said CIC-type receptacle 300 is in at the end of the blow-molding process (Fig. 4a).

In the second stage it is performed a preconfiguring process of the storage-compartments 310. The preconfiguring process takes place at the level of the upper-segment 301 of a CIC-type receptacle 300, by relocating the petaloid protrusions 264 (Fig. 4a) - present in the lateral regions of the top end of the internal component-unit 360 - towards the median M. The relocation may be performed via mechanical means; grooves 265 are functional-forms acting as folding elements thus facilitating the relocation of petaloid protrusions 264. At the end of this stage, two incipient storage-compartments 310 (Fig. 4b) should exist at the level of the upper-segment 301. At this point, below the level of the upper-segment 301, the walls of the component-units 360 and 340 should still be united.

In the third stage it is performed the complete configuring of the partitioning-system 361 and, concurrently, of the storage-compartments 310. This process is preferably performed at the same time with the liquid-bottling process. The liquid-bottling takes place via the two incipient storage-compartments 310 obtained in the previous stage. By shooting pressurized liquids in said two incipient storage-compartments 310, a delamination process should occur below the level of the upper-segment 301. More precisely, it should occur the suppression of the interface present between the walls of the internal component-unit 360 and those of the intermediate component-unit 340, at least in the side areas appertaining to side-sections 306. Ensuing the delamination process, the lateral walls of the internal component-unit 360 should be relocated, under the pressure exerted by the injected liquids, towards the region of the median M of the CIC-type receptacle 300.

When the relocation of the lateral walls of the internal component-unit 360 ends, a double-walled partitioning-system 361 (Fig. 6a) should be formed in the region of the median M of the CIC-type receptacle 300. Concurrently, two complete, and fully bottled, storage-compartments 310 should emerge between the walls of the partitioning-system 361 and the outer walls of a CIC-type receptacle 300 on the lateral sides of said CIC-type receptacle 300.

The delamination and relocation of the said walls of the internal component-unit 360 may be actively influenced by the presence in the structure of a CIC-type receptacle 300 of certain elements detailed previously, among which: operational-sections (e.g. 304, 305, 306), functional-forms (e.g. 394, 395, 396, 397), also, possibly, functional-forms of compliant-mechanism-type, plus one or more components of a connecting-system as detailed previously, as well as build-class factors.

Alternatively, a configuring method for a CIC-type receptacle may involve obtaining two incipient storage-compartments by enlarging two initial cavities. Therefore, an alternate CIC-type receptacle 410 (Fig. 5) may have two lateral notches 414 at the top end of the internal component-unit 413. The cavities 415 should be formed between the walls of the notches 414 and the walls of the intermediate component-unit 412, as early as the assembly stage of the preform-set from which the said receptacle 410 derives. By relocating the notches 414 - either via mechanical means or using a fluid, e.g. compressed air - the cavities 415 should be enlarged and thus the incipient storage-compartments should be formed.

Alternatively, a configuring method for a CIC-type receptacle (not illustrated) can combine the two previous solutions.

Alternatively, a configuring method for a CIC-type receptacle may involve utilizing a CIC-type receptacle (not illustrated) which has no protrusions and/ or notches. The two incipient storage-compartments of a said CIC-type receptacle may be formed by using appropriate means, especially but not exclusively mechanical-type means, to push the lateral regions present at the top end of one of the component-units towards the region of the median M of said CIC-type receptacle.

Alternatively, a configuring method for a CIC-type receptacle 300 may involve configuring the partitioning-system 361 and the storage-compartments 310 prior to liquid-bottling. This prior configuring may also be only a partial one. To perform a prior configuring, either a fluid, or mechanical means, or possibly a combination of methods may be used. In the case of using a fluid, in the two incipient storage-compartments 310 may be introduced, for example but not exclusively, compressed air. Subjected to compressed air, the interface between the lateral walls of the internal component-unit 360 and the intermediate component-unit 340 should be suppressed; the lateral walls of the internal component-unit 360 should be thus relocated towards median M, hence achieving the partitioning-system 361 and the storage-compartments 310. In the case of using mechanical means, certain mechanical parts, e.g. rod-type ones, may be introduced through the incipient storage-compartments 310 to suppress the interface between the internal component-unit 360 and intermediate component-unit 340. These mechanical parts then can be moved towards the median M with the purpose of pushing against the lateral walls of the internal component-unit 360, hence relocating and transforming said walls into a partitioning-system 361. As already mentioned, a combination of methods can also be employed, for example involving both mechanical means and a fluid. The said prior configuring of the storage-compartments 310 may potentially be carried out in continuation of the blow-molding process, while the CIC-type receptacle 300 still is, at least partially, in the mold in which said process was conducted.

Other configuring methods involve combining, in various ways, elements of the above-indicated methods.

### Atomizer Details

Next, the description details an atomizer 500 compatible with a CIC-type receptacle 300 and apt to simultaneously disperse two liquids. Operation of atomizer 500 is based on principles similar to those of conventional atomizers equipped with hand-operated pumping mechanisms.

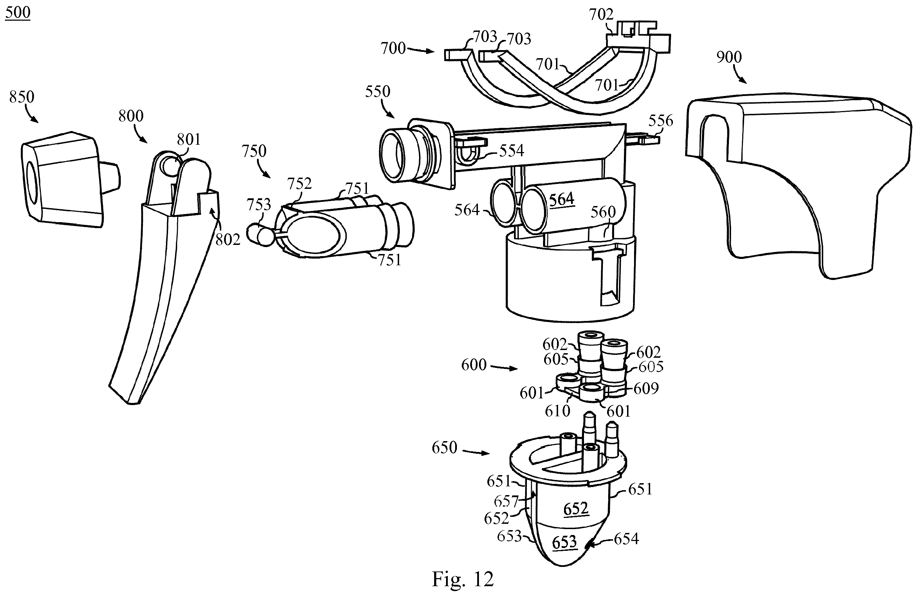

Fig. 12 illustrates the atomizer 500 which is composed of:
- a main body 550
- a valve-system 600
- a closing assembly 650
- a return-spring 700
- a piston-set 750
- an actuation element 800, of the trigger type
- a spraying nozzle 850
- a protection element 900

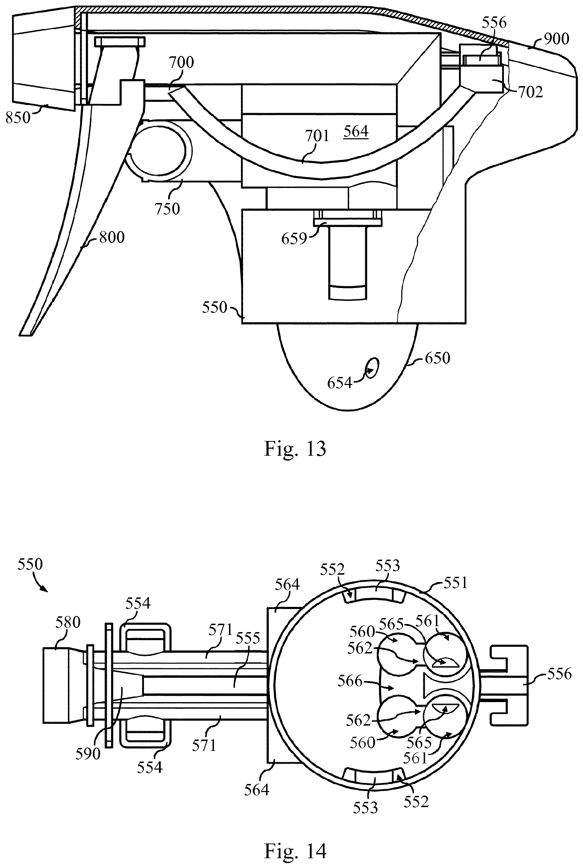

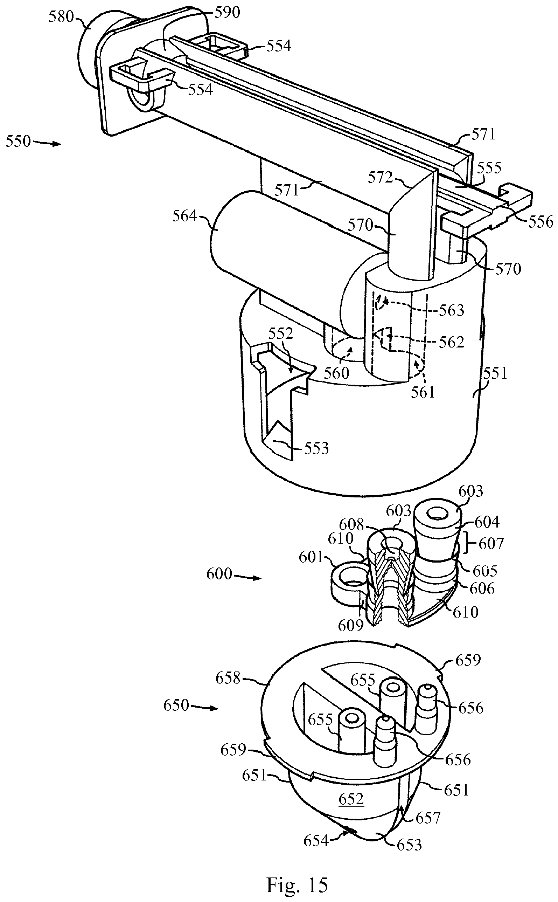

Among the elements of the main body 550 there are:
- two cylinders 564, which constitute the pressure lifting chambers
- the housings 560 and 561 (Fig. 14-15), which accommodate the main components of the valve-system
- the perforations 563 (Fig. 15), which connect the housings 561 and the cylinders 564
- the semicylindrical ducts 570 and 571, which are part of the liquid-passageways
- the forepart region of the main body 550, which forms together with the spraying nozzle 850 the liquid spraying assembly.

The valve-system 600 (Fig. 12 and Fig. 15) consists of two valve-subassemblies. Each valve-subassembly consists mainly of a valve 602 (Fig. 12) and an annular seal 601; a bridge 609 connects the annular seal 601 and the valve 602. An additional bridge 610 connects the two valve-subassemblies of the valve-system 600.

Owing to assembling, the valves 602 are inserted into the housings 561 of the main body 550. Each of the valves 602 is composed of:
- the sealing base 606 - which seals the opening at the bottom of the corresponding housing 561
- the flexible circular flap 605 - acting as a check-valve
- the semiflexible crown 603 - acting as a precompression mechanism and which said semiflexible crown 603 includes:
   ∘ the circular region 604 acting as sealing element - the surface of the circular region 604 is in contact with the internal surface of the corresponding housing 561
   ∘ horizontal wall 608 (Fig. 15) - which blocks in operation the vertical (downwardly) circulation of liquids through the body of the valve 602; it also exerts control over the degree of flexibility of the semiflexible crown 603, hence also on the precompression.

The arrangement of the regions 607 (Fig. 15) of the valves 602 dictates - within the main body 550 - the exact location of the perforations 563 which connect the housings 561 and the cylinders 564. Positioning the perforations 563 between the upper edge of the flexible circular flaps 605 and the lower edge of the circular regions 604 enables proper operation of the atomizer.

Owing to assembling, the annular seals 601 are inserted into the housings 560 (Fig. 14 and Fig. 15). Annular seals 601 serve to seal the openings at the bottom of said housings 560.

Owing to assembling, the bridges 609 are inserted into the lower sections of the connecting passages 562 present between the housings 560 and 561. The bridges 609 are sealing elements blocking said lower sections of the connecting passages 562. The upper sections of said connecting passages 562 remain open even after the bridges 609 are fitted in place, forming between housings 560 and 561 a channel allowing free fluid-communication.

The bridge 610 reaches in the recess 566 (Fig. 14).

The following paragraphs succinctly disclose the functioning stages of an atomizer 500.

The liquids are extracted from the storage-compartments 310 of a CIC-type receptacle 300 and transferred inside the housings 560 of the main body 550 via the tubes 655 (Fig. 15). The said tubes 655 are part of the closing assembly 650 (the closing assembly will be detailed later). The top end of each tube 655 penetrates the corresponding annular seal 601 present at the bottom of the respective housing 560.

The liquids then reach the housings 561 via the upper sections of the connecting passages 562, basically flowing above the bridges 609. Next, flexible circular flaps 605 allow liquids to first access perforations 563 and later cylinders 564.

While operating the atomizer, as the pressure increases, liquids are discharged from the cylinders 564 also by means of perforations 563 into the housings 561. The flexible circular flaps 605 force the liquids to stay initially within the housings 561. The pressure buildup over a certain level in the housing 561 leads to the partial squashing of the semiflexible crowns 603 of the valves 602; consequently, the circular regions 604 of the semiflexible crowns 603 partially lose contact with the internal surface of the housings 561; the liquids are thus forced to the top end of the housings 561. Subsequently, the liquids are transferred through apertures 565 (Fig. 14) in the semicylindrical ducts 570 and 571 (Fig. 14 and Fig. 15). The liquids then progress to the front of the main body 550, reaching the spraying assembly.

The following paragraphs detail the spraying assembly, formed by forepart region of the main body 550 and the spraying nozzle 850.

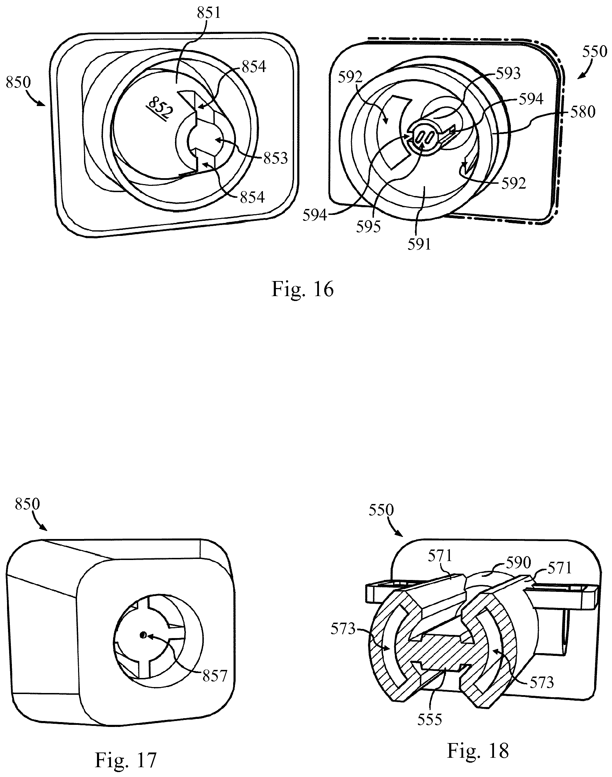

Fig. 16 shows the forepart region of the main body 550 and the spraying nozzle 850, adjacently, with a view of their interior. Fig. 17 and Fig. 18 show the same two components, illustrated at the same angle as in Fig. 16, but from the opposite direction; Fig. 17 provides a view of the front region of the spraying nozzle 850; Fig. 18 illustrates the forepart region of the main body 550, in a cross sectional perspective from the rear towards the front end.

A cylindrical region 580 present in the forepart region of the main body 550 (Fig. 14) is continued towards the back end with a frustoconical region 590 (Fig. 14-15). The large base of the frustoconical region 590 is open, in continuation of the cylindrical region 580, and the small base is closed. Horizontal semicylindrical ducts 571 intersect the frustoconical region 590 (Fig. 14 and Fig. 15); the inner-passageways 573 (Fig. 18) of said horizontal semicylindrical ducts 571 open up inside the frustoconical region 590 in the form of apertures 592 (Fig. 16) practiced on the inner face 591.

The cylindrical rod member 593 (Fig. 16) is arranged at the center of the closed small base of the frustoconical region 590 and has two longitudinal grooves 594, as well as a swirling chamber 595 on the front.

The spraying nozzle 850 has some corresponding elements to those present in the forepart region of the main body 550. Owing to assembling, the corresponding elements of the two components of the spraying assembly come into contact: the outer face 852 of the frustoconical region 851 of the spraying nozzle 850 comes into contact with the inner face 591 of the frustoconical region 590; the cylindrical rod member 593 reaches inside the cylindrical conduit 853 of the spraying nozzle 850.

The spraying nozzle 850 can rotate around the cylindrical rod member 593, having two positions: closed, when liquid spraying is blocked, and open, when spraying is possible. In the closed position, the outer face 852 of the frustoconical region 851 of the spraying nozzle 850 obstructs the apertures 592. The slots 854 are communication passages and, in closed position, are spaced out at an angle of 90 degrees relative to longitudinal grooves 594. By rotating the spraying nozzle 850 by 90 degrees, in open position, slots 854 allow communication between apertures 592 and longitudinal grooves 594. The liquids then reach the swirling chamber 595, where they are mixed, and subsequently the liquid mixture is discharged from the atomizer 500 via the orifice 857 (Fig. 17).

The following paragraphs detail some components and features of the atomizer 500.

Attaching the atomizer 500 to a CIC-type receptacle 300 is carried out by means of the socket 551 of the main body 550; the projections 553 in the area of the cutouts 552 (Fig. 14-15) - projections oriented towards the inside of the socket - slot into the recesses 231 (Fig. 4b) of the upper-segment 301 of a CIC-type receptacle 300.

Inside the main body 550, the liquid-passageway of each one of the two liquids dispersed by the atomizer 500 can be executed - during the injection molding phase of said main body 550 - such as to result unitary and continuous. The inner-passageways of the vertical semicylindrical ducts 570 can be practiced using the apertures 565 (Fig. 14), and those of the horizontal semicylindrical ducts 571 using the apertures 592 (Fig. 16). The inner-passageways of the two semicylindrical ducts 570 and 571 may form an angle of 90 degrees and may unite in the region 572 of the main body 550 (Fig. 15).

In order to reinforce the main body 550, the horizontal semicylindrical ducts 571 may be joined via deck 555 (Fig. 14 and Fig. 15), which said deck 555 may be continued at the rear by console 556, which said console 556 in turn may serve as mounting base for the return-spring 700.

The return-spring 700 (Fig. 12) may be made of acetal/ polyacetal or other types of plastics; the two curved arms 701 store - and subsequently release - an amount of the energy introduced into the system when operating the dispensing system 100 and therefore the atomizer 500. The return-spring 700 is secured to the main body 550 via the fixing base 702; the curved arms 701 sit alongside the flanks of the cylinders 564 (Fig. 13); fitting-ends 703 come in contact with the actuation element 800, in the upper lateral areas 802 of the latter.

The actuation element 800 (Fig. 12) may be attached to the seats 554 of the main body 550 via pins 801 located at its upper extremity.

The piston-set 750 (Fig. 12) consists of two pistons 751 joined by bridge 752. Owing to assembling, each of the two pistons is inserted in the corresponding cylinder 564 of the main body 550. When under the action of the actuation element 800, the piston-set 750 is moved via projection 753.

The closing assembly 650 (Fig. 12 and Fig. 15) is part of the atomizer 500 and acts as an intermediate component between the latter and a CIC-type receptacle 300. The closing assembly 650 ensures the closure of the storage-compartments 310 of a CIC-type receptacle 300 and, equally, mediates the transfer of liquids from a CIC-type receptacle 300 into an atomizer 500. The closing assembly 650 mainly comprises: two stopping members 651; two tubes 655 (already mentioned); two fastening rods 656; flange 658.

Owing to assembling of the dispensing system 100, each of the stopping members 651 is inserted in the corresponding storage-compartment 310 of a CIC-type receptacle 300. Within the closing assembly 650, the gap 657 separates the two stopping members 651; the gap 657 represents the place where the upper extremities of the walls of the partitioning-system 361 of a CIC-type receptacle 300 will end up after assembling the dispensing system 100.

Each of the stopping members 651 consists of a semicylindrical section 652 which is continued downwardly by a petaloid section 653. Owing to assembling, the semicylindrical sections 652 obstruct the storage-compartments 310 in the region of the upper-segment 301 of a CIC-type receptacle 300 (Fig. 4b). The petaloid sections 653 preferably come to be positioned below the level of the upper-segment 301, thus providing sitting surfaces to the top parts of the walls of the compression-system 341. In the absence of petaloid sections 653, pockets with non-dispersible liquid may develop in those particular areas at the top end of the storage-compartments 310, right below the upper-segments 301, at the end of the cycle-of-use of a CIC-type receptacle 300.

The tubes 655 allow liquid-extraction from the storage-compartments 310. The tubes 655 are connected to the bodies of the stopping members 651, more specifically to the petaloid sections 653. The perforations 654 present at the bottom of said tubes 655 penetrate the surface of the petaloid sections 653 (Fig. 13 and Fig. 15). The top ends of the tubes 655 may be projected above the level of the flange 658.

Owing to assembling, the fastening rods 656 reach the inner recesses of valves 602 - in the base section of said inner recesses - thus additionally securing the valve-system 600.

The flange 658 acts as a connecting bridge for stopping members 651 and as a base for fastening rods 656. The projections 659 (Fig. 13 and Fig. 15) of the flange 658 help to secure the closing assembly 650 to the structure of the main body 550 of the atomizer 500; owing to assembling, the projections 659 reach the upper regions of the cutouts 552 present in the lateral areas of the socket 551 (Fig. 15).

Alternatively, an atomizer may be fitted with dip tubes to facilitate liquid-extraction from the storage-compartments of a CIC-type receptacle. The atomizer can be fitted with such dip tubes for one or more storage-compartments. In the case of atomizer 500, dip tubes may be connected to stopping members 651 by means of perforations 654; the length of those said dip tubes may vary.

Alternatively, an atomizer (not illustrated) capable of dispersing liquids from a CIC-type receptacle with compartments with uneven volumes may have cylinders of different sizes; the corresponding pistons may also have different sizes.

By combining a CIC-type receptacle 300 and an atomizer 500 is obtained a dispensing system 100.

## Claims

1. Receptacle of container in container type, comprising one external component-unit and at least one internal component-unit, wherein between at least two of the component-units is provided a connecting-system including preferably a combination, but at least one, of:
i. at least one residual interface segment;
ii. at least one permanent-joint of adhesive or weld type.

2. Receptacle of claim **1,** wherein the said connecting-system includes at least one reinforcing functional-form, consisting of any three-dimensional feature embedded therein expressly to strengthen the connection between at least two of the component-units.

3. Receptacle of claim **1** or claim **2**, wherein the connecting-system presents at least one of the next characteristics:
i. it is at least partially contained within a dedicated operational-section;
ii. it has at least two of its parts at least partially superimposed;
iii. it is positioned preferably, but not mandatory, on the longitudinal median of the receptacle;
iv. it extends preferably on the entire height, but at least on one part of the height of the receptacle.

4. Receptacle of any one of the previous claims, wherein a partitioning-system is provided, consisting of at least one mobile-sector that:
i. develops from the said at least one internal component-unit via a delamination process; and, either simultaneously, or subsequently,
ii. also undergoes a repositioning process;
and wherein the delamination and repositioning processes occur:
i) either prior to, or in the liquid-bottling stage of the receptacle, or over both of the previously indicated phases; and
ii) in a way that employs the use either of at least one fluid, or of mechanical means, or of a combination of the two;
and wherein the said partitioning-system has its margins connected to the structure of the receptacle either (a.) partially, or (b.) completely.

5. Receptacle of any one of the previous claims, wherein a compression-system is provided, consisting of at least one mobile-sector that:
i. develops from the said at least one internal component-unit via a delamination process; and, either simultaneously, or subsequently,
ii. also undergoes a repositioning process;
and wherein the delamination process occurs:
i) either prior to, or over the cycle-of-use of the receptacle; and
ii) in a way that employs the use either of at least one fluid, or of mechanical means, or of a combination of the two;
and wherein the repositioning process occurs:
(i) during the cycle-of-use of the receptacle; and
(ii) in a way that employs the use of at least one fluid of which pressure-level can be either similar to, or different from that of the surrounding environment of the said receptacle;
and wherein the said compression-system decreases the volume capacity of at least one storage-compartment therein, in step with the liquid-utilization therefrom.

6. Receptacle of claims **4** and **5** wherein the partitioning-system and the compression-system share the at least one mobile-sector.

7. Receptacle of any one of the previous claims, wherein at least one functional-form, consisting of any three-dimensional feature embedded anywhere therein with a precise functioning purpose, performs at least one of the following tasks:
i. strengthens the connection between at least two of the component-units of the receptacle;
ii. partakes in demarcating at least one operational-section from the rest of the structure of the receptacle;
iii. partakes in demarcating at least one mobile-sector, which said mobile-sector develops from the said at least one internal component-unit via a delamination process therein;
iv. acts as a hinge or folding element for at least one mobile-sector;
v. affects the shape and/ or path of movement of a related mobile-sector in the course of a repositioning process of the same;
and/ or wherein at least one operational-section, consisting of any area of the structure of the receptacle having a functioning purpose and which is expressly demarcated via the general design and/ or via at least one functional-form, performs at least one of the following tasks:
i) houses at least partially a connecting-system provided between at least two of the component-units;
ii) via a delamination process therein produces at least one of:
a) a mobile-sector per se;
b) the peripheral area of an at least one mobile-sector.

8. Receptacle of any one of the claims **4 - 7**, wherein at least one of:
i. a mobile-sector;
ii. a functional-form embedded within a mobile-sector;
by making use of the resilience of the material of which the corresponding at least one internal component-unit is produced, exhibits at least partially a non-linear-type behavior in the course of a repositioning process.

9. Preform-set for producing a receptacle of container in container type, comprising one external component-preform and at least one internal component-preform,
wherein at least one permanent-joint of adhesive or weld type is provided between at least two of the component-preforms in the form of at least one non-breakable line or stripe executed as at least one substantially vertical segment, extending preferably on the entire height, but at least on one part of the height of the preform-set, and positioned preferably, but not mandatory, on the longitudinal median,
wherein the longitudinal median preferably matches the same of the resulting receptacle.

10. Preform-set of claim **9**, comprising at least one of the following:
i. at least one coupling element situated on the upper-segment of the external component-preform;
ii. an air-access mechanism, present in the neck area and comprising inter alia:
(a.)a built-in enclosure formed either: (1.) between two preferably concentric circular walls located in the upper-segment of the external component-preform; or (2.) between a preferably circular wall located in the upper-segment of the external component-preform and a preferably circular wall located in the upper-segment of an at least one internal component-preform;
(b.)a flexible circular flap acting as a check-valve, wherein upon assembling the flexible circular flap is inserted into the said built-in enclosure, and wherein the said flexible circular flap is either: (1.) attached to the upper-segment of an at least one internal component-preform; or (2.) is produced and fitted separately.

11. Method for partitioning a receptacle of container in container type, wherein:
i. in the first-stage, a receptacle of container in container type is provided in the state it is in at the end of the blow-molding process;
ii. in the second-stage, a preconfiguring process is carried out in the upper-segment area of the receptacle, by repositioning at least one lateral region present at the top end of an at least one internal component-unit, using either mechanical means, or at least one fluid, or a combination of the two;
iii. in the third-stage, a two-phase complete configuring process is carried out:
a. initially, by at least partially delaminating the external structure of the receptacle; and
b. next, by repositioning, preferably towards the longitudinal median of the receptacle, at least one mobile-sector which develops via the previously indicated delamination from the structure of an at least one internal component-unit;
and wherein the said two phases of the third-stage, the delaminating and, respectively, the repositioning, are carried out:
1. either independently, or concurrently; and
2. by employing either mechanical means, or at least one fluid, or a combination of the two.

12. Method of claim **11**, wherein: (i.) preferably the whole third-stage, (ii.) but at least the second phase of the third-stage, namely the repositioning, is at least partially carried out during the liquid-bottling stage of the receptacle, utilizing at least one liquid that is actually being bottled.

13. Atomizer for dispensing fluids, comprising at least:
i. a main body, having at least one cylinder;
ii. a piston-set, comprising at least one piston;
iii. an actuation element, preferably of trigger type;
iv. a spraying nozzle;
wherein the forepart region of the main body comprises a cylindrical region continued towards the back-end by a frustoconical region, wherein the large base of the frustoconical region is open, in continuation of the said cylindrical region, and the small base is closed;
and wherein the said frustoconical region is intersected by at least one duct, wherein the inner-passageway of the said at least one duct opens up inside the frustoconical region in the form of an aperture.

14. Atomizer of claim **13**, comprising at least one of:
i. a plastic return-spring having two curved arms which upon assembly sit on the lateral sides of the main body of the atomizer, wherein the said plastic return-spring is secured via a fastening base to a console present at the rear end of the main body of the atomizer;
ii. a precompression valve-system comprising at least one valve-subassembly which consists at least of: (a.) a valve; (b.) an annular seal; (c.) a bridge, which connects the valve and the annular seal;
wherein the said valve consists at least of: (1.) a valve body; (2.) a sealing base; (3.) a flexible circular flap acting as a check-valve; (4.) a semiflexible crown functioning as a precompression mechanism;
and wherein the said semiflexible crown:
- consists of a circular region at the top of the valve body operating as a non-permanent sealing element against the walls of the corresponding valve-housing;
- includes an inner horizontal wall that blocks the liquid circulation through the body of the valve and exerts control over the degree of flexibility of the semiflexible crown, hence also exerts control on the precompression;
wherein the said at least one valve-subassembly is connected to any similar one by a bridge.

15. Multifluid dispensing system comprising a receptacle analogous to one of any one of the claims **1 - 8** and an atomizer analogous to one of any one of the claims **13 - 14**, wherein a closing assembly sitting between the two components:
i. ensures the closure of the storage-compartments of the said receptacle; and
ii. mediates the transfer of liquids from the said receptacle.
